# EUROPÄISCHE PATENTSCHRIFT

(11) **EP 2 628 965 B1**
(45) Veröffentlichungstag und Bekanntmachung des Hinweises auf die Patenterteilung: **28.12.2016**
(21) Anmeldenummer: 13162284.7
(22) Anmeldetag: 03.03.2010
(51) Int. Cl.: F16B 39/30

(54) **SICHERUNGSSCHRAUBE, SCHRAUBENVERBINDUNG SOWIE VERFAHREN ZUM HERSTELLEN EINER SICHERUNGSSCHRAUBE**
RETAINING SCREW, SCREW CONNECTION AND METHOD FOR PRODUCING A RETAINING SCREW
VIS DE FIXATION, LIAISON À VIS ET PROCÉDÉ DE FABRICATION D'UNE VIS DE FIXATION

(30) Priorität: 03.03.2009 DE 102009011127; 21.08.2009 DE 202009011360 U; 20.11.2009 DE 102009053882
(43) Veröffentlichungstag der Anmeldung: 21.08.2013
(62) Teilanmeldung aus: 12175900.5
(73) Patentinhaber: Flaig, Hartmut, 78554 Aldingen (DE)
(72) Erfinder: Holscher, Winfried K.W., 78234 Engen (DE)
(74) Vertreter: Wagner, Kilian

(56) Entgegenhaltungen:
- EP-A1- 2 404 069
- DE-A1- 1 475 093
- GB-A- 1 152 629
- GB-A- 1 169 842
- US-A- 3 661 194
- US-A- 3 794 092

## Beschreibung

Die Erfindung betrifft eine Sicherungsschraube für eine Schraubverbindung, mit einem Körper mit Außengewinde, welches mindestens eine von zwei Gewindezähnen begrenzte Sicherungsgewindegangwindung aufweist, deren Querschnittsprofil im Vergleich zu dem Querschnittsprofil mindestens einer weiteren Gewindegangwindung, vorzugsweise im Vergleich zu mehreren weiteren Gewindegangwindungen, bevorzugt im Vergleich zu der überwiegenden Anzahl von Gewindegangwindungen zum Erhöhen des Kraftschlusses einer die Sicherungsschraube aufweisenden Schraubverbindung verformt ist. Ferner betrifft die Erfindung eine Schraubverbindung mit einer Sicherungsschraube sowie ein Verfahren und eine Vorrichtung zum Herstellen einer vorher genannten Sicherungsschraube.

Aus der DE 10 2005 050 919 A1 ist eine Sicherungsschraube mit Außengewinde bekannt, welches mehrere Sicherungsgewindegangwindungen aufweist, wobei das Querschnittsprofil der Sicherungsgewindegangwindungen im Vergleich zu der überwiegenden Anzahl von Gewindegangwindungen zum Erhöhen des Kraftschlusses einer die Sicherungsschraube aufweisenden Schraubverbindung verengt ist. In der Druckschrift sind unterschiedliche Möglichkeiten zur Herstellung der Sicherungsgewindegangwindungen beschrieben. Gemäß einer bekannten Ausführungsform wird mindestens ein Gewindezahn radial verstemmt, so dass dieser sich in beide Axialrichtungen verbreitert. Gemäß einer alternativen bekannten Ausführungsform werden zwei axial benachbarte Gewindezähne in einander entgegen gesetzten Axialrichtungen verdrängt. Die Sicherungs-, d.h. Bremswirkung der bekannten Sicherungsschraube scheint verbesserungswürdig. Insbesondere sollte die Sicherungsschraube auch nach mehrfachen Schraubvorgängen ihre Sicherungsfunktion erfüllen.

Aus der österreichischen Patentschrift Nr. 338 572 ist eine Sicherungsschraube mit Außengewinde bekannt, welches mehrere axial unmittelbar benachbarte Sicherungsgewindegangwindungen aufweist, wobei das Querschnittsprofil der Sicherungsgewindegangwindungen im Vergleich zu Normal-Gewindegangwindungen zum Erhöhen des Kraftschlusses einer die Sicherungsschraube aufweisenden Schraubverbindung verengt ist. Hierzu sind die die Sicherungsgewindegangwindungen begrenzenden Gewindezähne entgegen der Einschraubrichtung, d.h. in Zugbelastungsrichtung bzw. in Richtung Schraubenkopf verformt. Nachteilig bei der bekannten Sicherungsschraube ist, dass diese ihre Sicherungsfunktion nicht befriedigend, insbesondere nicht nach mehreren Schraubvorgängen erfüllt. Die entgegen der Einschraubrichtung deformierten Gewindezähne werden beim Festziehen der Schraube plastisch deformiert, bis das Innengewindeelement an dem entgegen der Einschraubrichtung orientierten Flanken sämtlicher Gewindezähne anliegt. Ferner ist von Nachteil, dass die Sicherungsgewindegänge aufwändig mit speziell konstruierten Matrizen bei der Herstellung der Schraube erzeugt werden müssen. Somit ist es nicht kostengünstig möglich, ein kleines Los mit einer bestimmten Anzahl an an einer bestimmten Axialposition befindlichen Sicherungsgewindegängen herzustellen.

Aus der GB 116 984 ist eine Schraube bekannt, bei der die Gewindezahnflanken ausdrücklich nur über einen Umfangsabschnitt zwischen 10% und 40% des Gesamtumfangs deformiert sind, wobei die Deformierung durch nährungsweises Parallelverschieben erfolgt.

Aus der US 3 794 092 ist eine gattungsgemäße Sicherungsschraube bekannt, bei der Gewindezahnflanken vollumfänglich durch Auswölben der in eine Einschraubrichtung weisenden Gewindeflanke und Einwölben der gegen die Einschraubrichtung weisenden Gewindeflanke deformiert werden und die Axialposition der Gewindespitze unverändert bleibt.

Der Erfindung liegt daher die Aufgabe zugrunde eine Sicherungsschraube mit optimierter Sicherungsfunktion anzugeben. Bevorzugt soll die Sicherungsfunktion (Haltefunktion, Bremsfunktion) auch nach einer Vielzahl von Schraubvorgängen geleistet sein. Ferner besteht die Aufgabe darin, eine entsprechend optimierte Sicherungsschraubverbindung sowie ein Verfahren und eine Vorrichtung zum Herstellen einer optimierten Sicherungsschraube anzugeben.

Diese Aufgabe wird hinsichtlich der Sicherungsschraube mit den Merkmalen des Anspruchs 1 gelöst. Hinsichtlich der Schraubverbindung wird die Aufgabe mit den Merkmalen des Anspruchs 10 gelöst. Hinsichtlich des Verfahrens wird die Aufgabe mit den Merkmalen des Anspruchs 11 gelöst.

Die erfindungsgemäße Sicherungsschraube kann hergestellt werden mit einer Vorrichtung zur nachträglichen Gewindezahndeformation. Dabei ist vorgesehen, dass die Vorrichtung als Deformiervorrichtung zum Deformieren des ausschließlich einen die Sicherungsgewindegangwindung begrenzenden Gewindezahnes oder der beiden die Sicherungsgewindegangwindungen begrenzenden Gewindezähne ausgebildet ist, wobei die Vorrichtung eine zum drehfesten Halten eines mit einem Norm-Außengewinde versehenen Schraubenrohling ausgebildete Halterung aufweist und mit mindestens zwei in Umfangsrichtung nebeneinander angeordneten, in radialer Richtung auf den Schraubenrohling zu verstellbaren Stempelsegmenten versehen ist, die zum Deformieren des einen Gewindezahnes bzw. der mehreren Gewindezähne in die ausschließlich eine Axialrichtung ausgebildet sind. Alternativ kann der mindestens eine Sicherungsgewindegang mit einer Rolliereinrichtung geformt werden, d.h. durch Erzeugen einer Relativbewegung zwischen dem bevorzugt gehärteten Rohling und dem Rollierwerkzeug bzw. ein Backenwerkzeug.

Vorteilhafte Weiterbildungen der Erfindung sind in den Unteransprüchen angegeben.

Die Erfindung hat erkannt, dass es zur Gewährleistung einer dauerhaften Sicherungsfunktion nachteilig ist, wenn entweder ein Gewindezahn, beispielsweise durch radiales Verstemmen, in beide Axialrichtungen deformiert ist, oder wenn zwei axial benachbarte Gewindezähne des Außengewindes in unterschiedliche Axialrichtungen deformiert sind, da jeweils eine Deformationsrichtung der Sicherungswirkung beim Verschrauben der Sicherungsschraube mit einem Innengewindeelement entgegen wirkt, im Extremfall sogar derart, dass die Sicherungsfunktion aufgehoben wird, wenn die Sicherungsschraube wie üblich belastet wird. Ferner hat die Erfindung erkannt, dass die in der österreichischen Patentschrift AT 338 572 beschriebene Lösung mit den ausschließlich in eine gemeinsame Axialrichtung deformierten Gewindezähnen ebenfalls nicht den gewünschten Effekt hat. Dies liegt nach der der Erfindung zugrunde liegenden Erkenntnis darin begründet, dass die Gewindezähne bei der bekannten Sicherungsschraube in die falsche Axialrichtung, nämlich in Zugbelastungsrichtung bzw. entgegen der Einschraubrichtung deformiert sind, was dazu führt, dass die deformierten Gewindezähne beim Festziehen der Schraube in einem plastischen Bereich verformt werden, und zwar solange bis schlussendlich alle Gewindezähne ihrer der entgegen der Einschraubrichtung orientierten Flanke jeweils an einer entsprechenden Gegenflanke des mit der Sicherungsschraube verschraubten Innengewindeelementes (insbesondere Mutter) anliegen. Zwar lässt sich die bekannte Sicherungsschraube ähnlich schwer wie die hier vorgeschlagene Sicherungsschraube in ein Innengewinde eines Innengewindeelementes einschrauben - der Bremseffekt wird jedoch beim Festziehen aufgrund der falschen Orientierung der deformierten Gewindezähne zumindest teilweise wieder aufgehoben, so dass zum einen nicht der gewünschte Bremsmomenteffekt resultiert und zum anderen die bekannte Sicherungsschraube aufgrund der resultierenden plastischen Verformung nicht wieder verwendbar ist.

Zur Verbesserung der Sicherungswirkung, insbesondere zur Gewährleistung einer dauerhaften Sicherungs-, d.h. Brems- bzw. Haltewirkung, wird daher erfindungsgemäß vorgeschlagen für den Fall des Vorsehens einer allein stehenden Sicherungsgewindegangwindung nur einen der beiden die Sicherungsgewindegangwindung axial begrenzenden Gewindezähne in ausschließlich eine Axialrichtung und zwar in Einschraubrichtung, d.h. entgegen der Zugbelastungsrichtung zu deformieren, also ausschließlich in Einschraubrichtung (bezogen auf das Außengewindeelement) zu verformen und die beiden axial zu dem derart verformten Gewindezahn benachbarten Gewindezähne regelmäßig zu belassen, d.h. nicht zu deformieren. Auf diese Weise wird eine Sicherungsgewindegangwindung mit einem verengten Querschnittsprofil geschaffen, also eine Sicherungsgewindegangwindung, in die ein einziger Gewindezahn hineinverdrängt ist, während der axial in Einschraubrichtung gegenüberliegende, die Sicherungsgewindegangwindung begrenzende Gewindezahn unverändert beibehalten ist, ebenso wie der auf der anderen Axialseite (auf der Ausschraubrichtung bzw. Löserichtung) des deformierten Gewindezahns lokalisierte, von der verengten Sicherungsgewindegangwindung über eine Gewindegangwindung beabstandete Gewindezahn. Die Aufgabe wird zusätzlich oder alternativ auch dadurch gelöst, dass beide die Sicherungsgewindegangwindung axial begrenzenden Gewindezähne ausschließlich in eine gemeinsame Axialrichtung und zwar in die Einschraubrichtung der Sicherungsschraube deformiert sind, d.h. nicht in zwei einander entgegengesetzte Axialrichtungen und nicht entgegen der Einschraubrichtung, wobei es bevorzugt ist, die zu den deformierten Gewindezähnen axial benachbarten Gewindezähne, d.h. die zur Gruppe der deformierten Gewindezähne axial benachbarten Gewindezähne nicht zu deformieren, also regelmäßig zu belassen oder aber auch in die gleiche gemeinsame Axialrichtung, nämlich in Einschraubrichtung der Sicherungsschraube zu deformieren, insbesondere zu drücken bzw. zu verdrängen bzw. zu verbiegen. Bei einer nach dem Konzept der Erfindung ausgebildeten Sicherungsschraube kann die Position, ab der das Sicherungsmoment zu wirken beginnt, frei gewählt werden, da diese Position durch die Axialposition der mindestens einen Sicherungsgewindegangwindung bestimmt wird. Für unterschiedliche Anwendungszwecke können also unterschiedliche Sicherungsgewindegangwindungspositionen gewählt werden.

Unter einem in Einschraubrichtung deformierten Gewindezahn wird also ein, im Vergleich zu einem Regel- bzw. Normgewinde, insbesondere einem metrischen Gewinde, in eine Axialrichtung verformter Gewindezahn verstanden, der aufgrund seiner Deformierung derart mit einem korrespondierenden Norm- bzw. Regelgewinde, d.h. nicht deformierten Gegengewinde, zusammenwirkt, dass ein Bremsmoment resultiert.

Zum Erzeugen des gewünschten Sicherungs-, d.h. Brems- bzw. Haltemomentes, also zum Erhöhen des Kraftschlusses einer die Sicherungsschraube aufweisenden Schraubverbindung reicht es aus, einen Gewindezahn nur über einen Teil seiner 360° betragenden Gesamt-Umfangserstreckung axial und zwar in Einschraubrichtung zu deformieren, wobei es bevorzugt ist, den Gewindezahn, zumindest näherungsweise, über seine vollständige Umfangserstreckung in Einschraubrichtung zu deformieren, vorzugsweise indem der Bereich der Gewindezahnspitze in die benachbarte (Sicherungs-) Gewindegangwindung hineinverdrängt wird, um deren Querschnittsprofil zu verändern bzw. zu verformen, insbesondere zu verengen. Im Falle der Deformierung des Gewindezahns über seine gesamte Umfangserstreckung resultiert auch eine Verformung der benachbarten Sicherungsgewindegangwindung über ihre gesamte Umfangserstreckung von 360°. Bei entsprechender Deformierung des Gewindezahns nur über eine Teilumfangserstreckung resultiert auch nur eine über einen Umfangsabschnitt bzw. Teilumfang deformierte benachbarte Sicherungsgewindegangwindung.

Für den Fall der Deformierung zweier axial benachbarter Gewindezähne in eine gemeinsame Axialrichtung und zwar in die Einschraubrichtung der Sicherungsschraube werden zwei unmittelbar axial benachbarte Sicherungsgewindegangwindungen geschaffen. Es ist auch eine Ausführungsform realisierbar, bei der, wie eingangs erläutert, nur eine einzige Sicherungsgewindegangwindung vorgesehen ist oder bei der zwei Sicherungsgewindegangwindungen über mindestens eine nicht deformierte, d.h. Norm-Gewindegangwindung axial voneinander beabstandet sind. Ebenso ist es möglich eine Sicherungsgewindegangwindung von einer Gruppe von zwei oder mehr Sicherungsgewindegangwindungen axial über mindestens eine nicht deformierte Gewindegangwindung zu beabstanden oder zwei Gruppen von zwei oder mehr Sicherungsgewindegangwindungen axial über mindestens eine nicht deformierte Gewindegangwindung voneinander zu beabstanden.

Erfindungswesentlich ist es, dass der ausschließlich eine die Sicherungsgewindegangwindung begrenzende Gewindezahn oder die beiden die Sicherungsgewindegangwindung begrenzenden Gewindezähne in Abweichung zu der sich aus der AT 338 572 ergebenden Lehre ausschließlich entgegen der Belastungsrichtung der Schraube in deren bestimmungsgemäßem Einsatz deformiert ist/sind, d.h. entgegen der Zugbelastungsrichtung bzw. in Einschraubrichtung. Besonders bevorzugt wird der Gewindezahn bzw. werden die Gewindezähne derart plastisch verformt, dass dieser/diese beim Verschrauben mit einem Innengewinde, insbesondere ausschließlich, elastisch verformt wird/werden und/oder ein in die Sicherungsgewindegangwindung ragender Gewindezahn eines Innengewindes auf beiden Flankenseiten von jeweils einem Gewindezahn des Außengewindes kraftbeaufschlagt ist. Das Wirkprinzip der erfindungsgemäßen Sicherungsschraube ist zu vergleichen mit demjenigen, das beim Anziehen einer Schraube mit Vorspannung auf Block auftritt - die Flanke des deformierten Gewindezahnes bzw. der deformierten Gewindezähne liegt/liegen spielfrei auf jeweils einer benachbarten, entgegen der Einschraubrichtung der Schraube orientierten Innengewindeflanke an bzw. beschaufschlagt/ beaufschlagen diese mit einer Druckkraft. Dadurch, dass der mindestens eine deformierte Gewindezahn in Einschraubrichtung deformiert ist, stützt sich das Außengewinde der Sicherungsschraube in seiner Gesamtheit betrachtet zum einen mit den nicht deformierten Gewindezähnen an den in Einschraubrichtung orientierten Flanken der Gewindezähne des Innengewindeelementes ab und mit dem mindestens einen in Einschraubrichtung orientierten Gewindezahn (jeweils) an einer korrespondierenden, entgegen der Einschraubrichtung orientierten Flanke eines Innengewindezahnes - das Außengewinde ist also in beide Axialrichtungen im Innengewinde des Innengewindeelementes verspannt bzw. nimmt das Spiel aus der Schraubverbindung, so dass ein dauerhaftes, replizierbares Bremsmoment resultiert.

Gemäß der Erfindung ist mit Vorteil vorgesehen, dass der mindestens eine deformierte Gewindezahn nicht wie in der AT 338 572 ausschließlich durch Umbiegen (Verdrehen, Verschwenken) deformiert wird, also derart, dass ausschließlich am Scheitel bzw. an der radial äußersten Spitze ein Gewindesteigungsvorsprung resultiert. Gemäß der Erfindung ist vorgesehen, dass die entgegen der Einschraubrichtung orientierte Gewindeflanke des in Einschraubrichtung deformierten Zahnes zumindest abschnittsweise, vorzugsweise vollständig parallel verschoben ist und zwar in Einschraubrichtung. Unter zumindest "näherungsweise" parallel verschoben wird dabei verstanden, wenn der Flankenwinkel zwischen der entgegen der Einschraubrichtung orientierten Flanke des deformierten Gewindezahns und einer Radialebene um maximal 20%, vorzugsweise um maximal 15%, weiter bevorzugt nur um maximal 10%, noch weiter bevorzugt nur um maximal 5% von einem Flankenwinkel eines nicht deformierten Normgewindezahns abweicht. Beträgt der Flankenwinkel eines nicht deformierten Zahns also beispielsweise 30°, wie bei einem bevorzugten metrischen Gewinde, so soll der Flankenwinkel des axial parallel verschobenen (deformierten) Gewindezahns einen Winkel aus einem Winkelbereich zwischen 36° und 23°, vorzugsweise zwischen 34,5° und 26,5°, noch weiter bevorzugt zwischen 33° und 27°, noch weiter bevorzugt zwischen 31,5° und 28,5° betragen. Bevorzugt beträgt der Winkel ebenfalls 30° wie beim nicht deformierten Zahn. Ganz besonders bevorzugt ist es, falls nicht eine exakte Parallelverschiebung realisiert wird, dass der Flankenwinkel der entgegen der Einschraubrichtung orientierten Flanke des deformierten Gewindezahns (etwas) größer ist, insbesondere maximal 20% größer ist als der entsprechende Flankenwinkel eines nicht deformierten Zahnes. Die Parallelverschiebung kann auch nur abschnittsweise in einem radial äußeren Bereich realisiert sein, so dass eine in axialer Richtung gestufte, entgegen der Einschraubrichtung orientierte Gewindeflanke resultiert. Alternativ ist die entgegen der Einschraubrichtung orientierte Gewindeflanke des deformierten Zahns vollständig, d.h. zumindest (näherungsweise) vom Grund weg axial parallel verschoben. Im Falle der nur abschnittsweisen axialen Verschiebung des mindestens einen deformierten Zahnes ist es bevorzugt, wenn die Übergänge der resultierenden Stufung in der entgegen der Einschraubrichtung orientierten Flanke des deformierten Gewindezahns gerundete, d.h. bevorzugt keine kantigen Übergänge aufweist. Bevorzugt hat die Flanke im Falle der nur abschnittsweisen Parallelverschiebung die Form einer mathematischen Funktion mit Sattelpunkt, insbesondere zumindest näherungsweise die Form einer Funktion f(x) = x³.

Besonders bevorzugt ist es, wenn die Summe der beiden Flankenwinkel eines deformierten Gewindezahns geringer ist als die Summe der Flankenwinkel bei einem nicht deformierten Zahn. Bevorzugt ist die Summe um mindestens 8°, vorzugsweise mindestens 10° oder mehr Grad kleiner (insbesondere mindestens 15° kleiner) als bei einem nicht deformierten Zahn. Hierdurch wird die Elastizität des deformierten Gewindezahns im Vergleich zu den nicht deformierten Gewindezähnen erhöht, was sich wiederum positiv auf die Wiederverwendbarkeit der Sicherungsschraube auswirkt. Bevorzugt sind die Flankenwinkel auch unterschiedlich groß. Ganz besonders bevorzugt ist der Flankenwinkel zwischen der in Einschraubrichtung weisenden Flanke des deformierten Zahnes und einer Radialebene um etwa 40% bis 70% kleiner als der entgegen der Einschraubrichtung orientierte Flankenwinkel.

Weiterbildungsgemäß ist vorgesehen, dass die entgegen der Einschraubrichtung orientierte Gewindeflanke des ausschließlich einen in Einschraubrichtung deformierten Gewindezahns bzw. dass die entgegen der Einschraubrichtung orientierten Gewindezahnflanken der in Einschraubrichtung deformierten Gewindezähne jeweils eine Stufe aufweist/aufweisen, vorzugsweise mit gerundeten Übergängen zwischen den Stufenabschnitten.

Ein wesentlicher Vorteil einer nach dem Konzept der Erfindung ausgebildeten Sicherungsschraube besteht darin, dass diese vielfach anziehbar und wieder lösbar ist, ohne dass mit nennenswerten Bremsmomentverlusten gerechnet werden muss.

In Weiterbildung der Erfindung ist mit Vorteil vorgesehen, dass die Sicherungsschraube als Zugschraube ausgebildet ist, die im mit einem Innengewindeelement verschraubten Zustand auf Zug, d.h. entgegen der Einschraubrichtung belastet ist. Bevorzugt handelt es sich bei der Zugschraube um eine Kopfschraube, wobei es erfindungswesentlich ist, dass die ausschließlich eine Axialrichtung, in die der mindestens eine Gewindezahn deformiert ist, mit der Einschraubrichtung zusammenfällt, d.h., dass der mindestens eine Gewindezahn in Richtung vorderem Schraubenende bzw. vom Schraubenkopf weg deformiert ist.

Besonders zweckmäßig ist eine Ausführungsform der Sicherungsschraube, bei der für den Fall des Vorsehens mehrerer deformierter Gewindezähne sämtliche deformierten Gewindezähne ausschließlich in Einschraubrichtung deformiert sind, d.h. es ist am gesamten Außengewinde nicht ein einziger Gewindezahn vorgesehen, der entgegen der Einschraubrichtung deformiert ist.

Im Hinblick auf eine besonders kostengünstige Herstellbarkeit der Sicherungsschraube ist es bevorzugt, wenn der wenigstens eine wie zuvor beschrieben ausgebildete Sicherungsgewindegang das einzige den Kraftschluss erhöhende Sicherungsmittel der Sicherungsschraube ist, d.h. eine Ausführungsform, bei der auf weitere Sicherungsmittel verzichtet wird.

Besonders bevorzugt ist eine Ausführungsvariante, bei der die einzige Sicherungsgewindegangwindung oder im Falle von mehreren Sicherungsgewindegangwindungen einer der Sicherungsgewindegangwindungen die axial vorderste oder alternativ die axial hinterste Gewindegangwindung des Außengewindes bildet. Selbstverständlich sind auch Ausführungen realisierbar, bei der die ausschließlich eine Sicherungsgewindegangwindung oder die Sicherungsgewindegangwindungen mit Axialabstand zu einer vordersten und/oder hintersten Gewindegangwindung des Außengewindes angeordnet ist/sind.

Ganz besonders bevorzugt ist eine Ausführungsvariante, bei der der ausschließlich eine Gewindezahn oder die mehreren Gewindezähne jeweils nicht gleichmäßig über ihre Umfangserstreckung in die ausschließlich eine Axialrichtung, nämlich in Einschraubrichtung deformiert sind, sondern dass der ausschließlich eine Gewindezahn oder die mehreren Gewindezähne jeweils mindestens zwei Wellenabschnitte aufweisen, vorzugsweise mindestens drei oder vier über die Umfangserstreckung des Gewindezahnes bzw. der Gewindezähne von 360° verteilt angeordnete Wellenabschnitte, in welchen die Gewindezähne nicht oder geringfügiger deformiert sind, als die in Umfangsrichtung benachbarten, in ausschließlich eine Axialrichtung (Einschraubrichtung) deformierten Abschnitte. Bevorzugt sind diese nicht oder nur geringfügig deformierten (Wellen-) Abschnitte gleichmäßig in Umfangsrichtung verteilt angeordnet. Eine derartige Ausformung des Gewindezahnes bzw. der Gewindezähne mit einer unregelmäßigen Axialdeformierung kann mit einer nach dem Konzept der Erfindung ausgebildeten Vorrichtung hergestellt werden, die derart ausgebildet ist, dass der, vorzugsweise gehärtete, Schraubenrohling während des Deformierens drehfest gehalten ist und die Deformation des einen Gewindezahns oder der mehreren Gewindezähne mit einer Anzahl von den in Umfangsrichtung nebeneinander angeordneten Stempelsegmenten erfolgt. Die Wellenabschnitte sind darauf zurückzuführen, dass die Stempelsegmente ggf. in ihrer nach radial innen auf den Schraubenrohling verstellten Position in Umfangsrichtung nicht unmittelbar aneinander anliegen, sondern voneinander beabstandet sind. Realisierbar ist auch eine Ausführungsform ohne Wellenabschnitte, wenn sichergestellt ist, dass die Stempelsegmente in ihrer radial inneren Position einen geschlossenen Ring bilden. Bevorzugt wird mindestens eine Flanke des ausschließlich einen Gewindezahns oder jeweils mindestens eine Flanke der mehreren Gewindezähne bei der Deformierung um etwa 1° bis etwa 10°, vorzugsweise um etwa 2° bis etwa 8°, ganz besonders bevorzugt um etwa 5° gegenüber der ursprünglichen Neigung in die ausschließlich eine Axialrichtung geneigt, d.h. deformiert.

Die Erfindung führt auch auf eine Schraubverbindung mit einer wie zuvor beschrieben ausgebildeten Sicherungsschraube, die mit einem Innengewindeelement, insbesondere einer Mutter, verschraubt ist. Das Innengewinde weist bevorzugt keinen deformierten Gewindezahn auf, sondern ist durchgehend als zu dem mindestens einen Norm- bzw. Regelgewindeabschnitt der Sicherungsschraube korrespondierendes Norm- bzw. Regelinnengewinde, beispielsweise als metrisches Gewinde, ausgebildet. Es handelt sich also um ein Innengewinde, welches zum bremsmomentfreien Zusammenwirken mit dem mindestens einen Regel- bzw. Normgewindeabschnitt des Außengewindes der Sicherungsschraube ausgelegt ist.

Ferner führt die Erfindung auf ein Verfahren zum Herstellen einer wie zuvor beschrieben ausgebildeten Sicherungsschraube. Das Verfahren ist dadurch gekennzeichnet, dass zunächst ein herkömmlicher, vorzugsweise bereits gehärteter, Schraubenrohling mit einem regelmäßigen Außengewinde, insbesondere also eine fertige Norm- bzw. Standardschraube bereitgestellt wird, wobei das Außengewinde in einem darauffolgenden Schritt partiell deformiert wird und zwar derart, dass ausschließlich einer der die (spätere) Sicherungsgewindegangwindung begrenzenden Gewindezähne axial in Einschraubrichtung der Sicherungsschraube deformiert wird und die beiden zu diesem deformierten Gewindezahn axial benachbarten Gewindezähne regelmäßig belassen, d.h. nicht deformiert werden und/oder dadurch, dass beide den Sicherungsgewindegang begrenzenden Gewindezähne ausschließlich in die gemeinsame Axialrichtung, nämlich in Einschraubrichtung deformiert werden, wobei es bei einer derartigen Ausführungsform bevorzugt ist, wenn die beiden axial zu den deformierten Gewindezähnen benachbarten Gewindezähne regelmäßig belassen, d.h. nicht deformiert werden. Ganz besonders bevorzugt wird keiner der Gewindezähne des Außengewindes in eine entgegengesetzte Axialrichtung (Zugbelastungsrichtung), auch nicht in zwei entgegengesetzte Axialrichtungen deformiert. Zunächst scheint es überraschend eine bereits gehärtete Schraube, d.h. eine Schraube, die bereits ein Härtungsverfahren durchlaufen hat, partiell (erfindungsgemäß) zu deformieren. Diese Vorgehensweise bringt jedoch erhebliche Vorteile mit sich. So kann der Handwerker vor Ort mittels eines geeigneten Werkzeuges eine entsprechende Anzahl von Sicherungsschrauben herstellen und kann dabei nach Belieben die Axialposition, an welcher die mindestens eine Sicherungsgewindegangwindung vorhanden sein soll bestimmen. Da Sicherungsschrauben in der Regel nicht in einer beliebig großen Stückzahl benötigt werden kann zur Herstellung der Sicherungsschraube auf eine als Massenprodukt hergestellte, fertige Norm-Schraube als Schraubenrohling zur Anwendung des Verfahrens zurückgegriffen werden.

Besonders zweckmäßig ist es, wenn das Deformieren des mindestens einen Gewindezahns in Einschraubrichtung durch axiales Kraftbeaufschlagen erfolgt, vorzugsweise während einer Relativbewegung der Sicherungsschraube zu einem Deformierwerkzeug, wobei es besonders bevorzugt ist, wenn das Deformierwerkzeug still steht und die Sicherungsschraube bei gleichzeitiger Zugoder Druckbelastung relativ zu dem Werkzeug verdreht wird.

Besonders bevorzugt ist es gemäß einer alternativen Vorgehensweise, wenn der mit einem Norm-Außengewinde versehene, vorzugsweise gehärtete, Schraubenrohling bei der Deformation des einen die Sicherungsgewindegangwindung begrenzenden Gewindezahnes bzw. bei der Deformierung der mehreren Gewindezähne stillsteht, d.h. drehfest gehalten wird und die Deformation mit Hilfe von mindestens zwei in Umfangsrichtung nebeneinander angeordneten Stempelsegmenten vorgenommen wird und zwar durch eine Relativverstellbewegung der Stempelsegmente und des Schraubenrohlings in radialer Richtung aufeinander zu. Bevorzugt sind die Stempelsegmente zumindest näherungsweise gleich groß und gleichmäßig in Umfangsrichtung verteilt angeordnet, um eine gleichmäßige Druckbelastung auf den Schraubenrohling ausüben zu können. Grundsätzlich müssen sich die Stempelsegmente nicht, was jedoch bevorzugt ist, in am Schraubenrohling anliegenden Zustand über, zumindest näherungsweise, 360° erstrecken. Es ist auch denkbar, den ausschließlich einen Gewindezahn oder die mehreren Gewindezähne nur über zwei Umfangsabschnitte zu deformieren, wobei die Umfangsabschnitte in Summe bevorzugt einen Umfangswinkel aus einem Winkelbereich zwischen 90° und 270° ergeben.

Ganz besonders zweckmäßig ist es, wenn zumindest eine Flanke des ausschließlich einen Gewindezahns oder mindestens eine Flanke jedes der mehreren Gewindezähne aus einem Winkelbereich zwischen etwa 1° und etwa 10°, vorzugsweise zwischen etwa 2° und etwa 8°, ganz besonders bevorzugt etwa 5° in die ausschließlich eine Axialrichtung - verglichen mit der ursprünglichen Neigung - deformiert wird/werden. Ganz besonders bevorzugt erfolgt ein axialer Versatz des gesamten zu deformierenden Gewindezahnes, d.h. über, zumindest näherungsweise, seine gesamte Radialerstreckung.

Um eine möglichst robuste Sicherungsschraube zu erhalten, ist eine Ausführungsform bevorzugt, bei der das Außengewinde der Sicherungsschraube bereits vor dem Deformiervorgang vergütet wird.

Besonders zweckmäßig ist eine Verfahrensvariante, bei der der Schraubenrohling ausschließlich durch Umformen, insbesondere durch Pressen, ganz besonders bevorzugt durch Kaltfließpressen aus einem geeigneten Stahl hergestellt wird und anschließend, vorzugsweise nach vorhergehendem Härten, die Deformierung des mindestens einen Gewindezahns in Einschraubrichtung erfolgt. Ganz besonders bevorzugt wird vollständig auf eine spanende Bearbeitung der Sicherungsschraube bei deren Herstellung verzichtet.

Die Herstellung der Sicherungsschraube erfolgt bevorzugt mit einer Vorrichtung zur Herstellung einer wie zuvor beschrieben ausgebildeten Sicherungsschraube, ganz besonders bevorzugt zur Durchführung eines zuvor beschriebenen Verfahrens. Die Vorrichtung zeichnet sich durch eine Halterung aus, mit der ein Schraubenrohling zur Bearbeitung, d.h. während der Deformation, drehfest gehalten werden kann. Ganz besonders bevorzugt greift die Halterung hierzu in nicht zu deformierende Gewindegänge mit entsprechenden Innengewindeabschnitten ein. Ferner umfasst die Vorrichtung mindestens zwei in Umfangsrichtung nebeneinander angeordnete Stempelsegmente zum Deformieren eines oder mehrerer Gewindezähne, vorzugsweise ausschließlich in Einschraubrichtung (weg vom Schraubenkopf). Alternativ kann die Deformation mit einer Rollierwalze oder einem Backenwerkzeug erfolgen.

Besonders zweckmäßig ist es, wenn die Axialposition der Stempelsegmente relativ zu der Halterung zum drehfesten Halten des Schraubenrohlings einstellbar ist, vorzugsweise derart, dass der eine oder die mehreren zu deformierenden Gewindezähne aus einer Vielzahl von Gewindezähnen auswählbar sind und/oder um den Grad der Deformation einstellen zu können.

Weitere Vorteile, Merkmale und Einzelheiten der Erfindung ergeben sich aus der nachfolgenden Beschreibung bevorzugter Ausführungsbeispiele sowie anhand der Zeichnungen.

### Diese zeigen in:

- Fig. 1: zu Erläuterungszwecken eine ausschnittsweise, geschnittene Darstellung einer Sicherungsschraube mit einer einzigen Sicherungsgewindegangwindung, jedoch ohne gestufte Flanke;
- Fig. 2: zu Erläuterungszwecken ein alternatives Ausführungsbeispiel einer Sicherungsschraube mit insgesamt drei Sicherungsgewindegängen, jedoch ohne gestufte Flanke;
- Fig. 3: zu Erläuterungszwecken einen Herstellungsschritt zur Herstellung einer Sicherungsschraube durch Deformieren der axial benachbarten Sicherungsgewindezähne in eine gemeinsame Axialrichtung, jedoch ohne gestufte Flanke;
- Fig. 4: zu Erläuterungszwecken eine abgewickelte Darstellung eines Außengewindes einer Sicherungsschraube mit zwei Sicherungsgewindegangwindungen, jedoch ohne gestufte Flanke;
- Fig. 5: eine schematische Darstellung einer Vorrichtung zum Deformieren mindestens eines Gewindezahns eines Schraubenrohlings in einer Draufsicht,
- Fig. 6: eine teilgeschnittene Ansicht einer bevorzugten Ausführungsform einer derartigen Vorrichtung,
- Fig. 7a: eine vergrößerte Darstellung einer Schraubverbindung, umfassend eine Standardschraube und eine Mutter;
- Fig. 7b: eine Schraubverbindung, umfassend eine Sicherungsschraube mit einem in Einschraubrichtung deformierten Gewindezahn, wobei die gezeigte Sicherungsschraube nicht eine erfindungsgemäß gestufte Flanke aufweist;
- Fig. 7c: eine Schraubverbindung, umfassend eine Sicherungsschraube mit zwei über einen nicht deformierten Gewindezahn axial voneinander beabstandeten, jeweils in Einschraubrichtung deformierten Gewindezähnen, wobei die Sicherungsschraube nicht eine erfindungsgemäß gestufte Flanke aufweist;
- Fig. 7d: ein vergrößertes Detail aus Fig. 7c;
- Fig. 8 bis Fig. 10:: Messergebnisse (Abtastprotokolle) von unterschiedlichen Ausführungsformen von Sicherungsschrauben mit in Einschraubrichtung deformierten Gewindezähnen, wobei es sich um erfindungsgemäße Sicherungsschrauben mit gestufter Flanke handelt.

In den Figuren sind gleiche Elemente und Elemente mit der gleichen Funktion mit den gleichen Bezugszeichen gekennzeichnet.

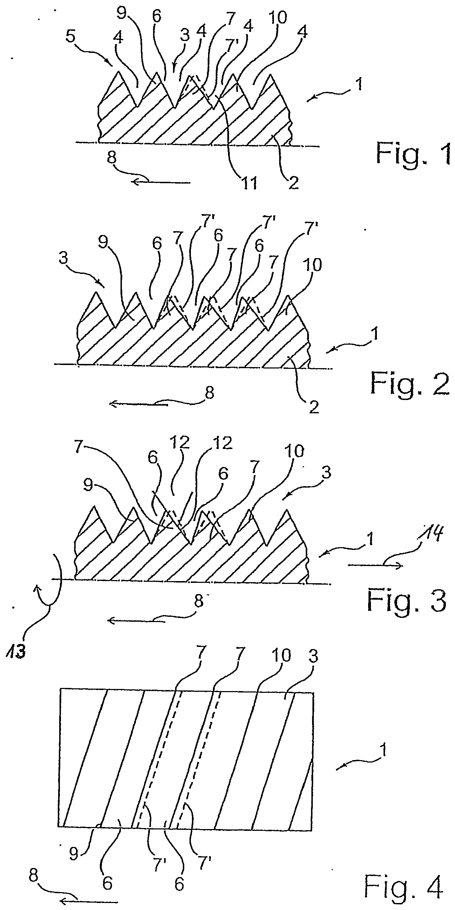

In Fig. 1 ist in einer unvollständigen Darstellung ein Längsschnitt durch eine Sicherungsschraube 1 gezeigt. Zu erkennen ist ein Körper 2 (hier ein Schraubenschaft) der Sicherungsschraube. Auf die Darstellung eines gegebenenfalls vorgesehenen Schraubenkopfes wurde aus Übersichtlichkeitsgründen verzichtet.

Der Körper 2 ist mit einem Außengewinde 3 versehen, wobei von dem Außengewinde 3 die Querschnittsprofile (Schnittrichtung in Längsrichtung der Schraube) von insgesamt vier Gewindegangwindungen 4 gezeigt sind. Von den vier Gewindegangwindungen 4 des Gewindegangs 5 des Außengewindes 3 ist eine einzige Gewindegangwindung als sogenannte Sicherungsgewindegangwindung 6 ausgeführt, deren Querschnittsprofil im Vergleich zu den anderen Gewindegangwindungen 4 verformt, hier verengt ist. Die Verformung des Querschnittsprofils der Sicherungsgewindegangwindung 6 resultiert aus einer Deformierung des den die Sicherungsgewindegangwindung 6 rechts begrenzenden Gewindezahns 7 in der Zeichnungsebene nach links in eine erste Axialrichtung 8, die mit der Einschraubrichtung der Sicherungsschraube 1 zusammenfällt. Vor der Deformierung in die erste Axialrichtung 8 (Einschraubrichtung) hatte der mit dem Bezugszeichen 7 gekennzeichnete Gewindezahn die mit dem Bezugszeichen 7' gekennzeichnete (normale) Gewindezahnform, d.h. die Gewindezahnform eines Regel- bzw. Normgewindes. Die beiden axial zu dem deformierten Gewindezahn 7 benachbarten Gewindezähne 9,10, von denen der Gewindezahn 9 die Sicherungsgewindegangwindung 6 axial vorne begrenzt, sind nicht deformiert, d.h. sie werden ursprünglich (normal) belassen. Die Gewindezähne 9, 10 gehören also zu nicht deformierten Gewindeabschnitten, d.h. zu Norm- bzw. Regelgewindeabschnitten.

Wie sich aus Fig. 1 ergibt, wurde der Gewindezahn 7 in der Zeichnungsebene nach links durch Kraftbeaufschlagung von rechts (etwas) verdrängt, mit der Folge, dass die Sicherungsgewindegangwindung 6 (etwas) verengt ist und die in der Zeichnungsebene rechts benachbarte Gewindegangwindung 11 (etwas) verbreitert ist.

Aus Fig. 1 ergibt sich, dass kein weiterer Gewindezahn außer der Gewindezahn 7 deformiert ist, auch nicht in eine der ersten Axialrichtung 8 entgegengesetzte Axialrichtung.

Fig. 2 zeigt eine alternative Ausführungsform einer Sicherungsschraube 1, deren Körper 2 ebenfalls ein Außengewinde 3 aufweist. Im Gegensatz zu den zuvor beschriebenen und im Fig. 1 dargestellten Ausführungsbeispiel sind beim Ausführungsbeispiel gemäß Fig. 2 insgesamt sechs Sicherungsgewindegangwindungen 6 vorgesehen. Jeweils beide, die rechten beiden Sicherungsgewindegangwindungen 6 axial begrenzenden Gewindezähne 7 sind in eine gemeinsame (erste) Axialrichtung 8, d.h. in Einschraubrichtung verdrängt, d.h. deformiert, wohingegen lediglich der die linke Sicherungsgewindegangwindung 6 rechts begrenzende Gewindezahn 7 in die erste Axialrichtung 8, d.h. in Einschraubrichtung deformiert ist. Die beiden, die deformierten Gewindezähne 7 axial sandwichartig zwischen sich aufnehmenden Gewindezähne 9, 10 sind hingegen nicht deformiert, d.h. wie ursprünglich belassen. Die Gewindezähne 9, 10 sind also jeweils Bestandteil eines Norm- bzw. Regelgewindeabschnittes, wobei diese Norm- bzw. Regelgewindeabschnitte durch die Sicherungsgewindegangwindungen 6 voneinander axial beabstandet sind.

Aus Fig. 2 ergibt sich somit ein verformtes Querschnittsprofil sämtlicher Sicherungsgewindegangwindungen 6, wobei sich das Querschnittsprofil der in der Zeichnungsebene linken Sicherungsgewindegangwindung 6 (etwas) von den Querschnittsprofilen der anderen beiden axial benachbarten Sicherungsgewindegangwindungen 6 unterscheidet, da nur der die linke Sicherungsgewindegangwindung 6 rechts begrenzende Gewindezahn 7 in die erste Axialrichtung (Einschraubrichtung) deformiert ist, wohingegen der diese Sicherungsgewindegangwindung 6 links begrenzende Gewindezahn 9 nicht deformiert ist. Bei den anderen beiden Sicherungsgewindegangwindungen 6 sind jeweils beide diese jeweils begrenzenden Gewindezähne 7 in die erste Axialrichtung 8 deformiert. Fig. 3 zeigt einen Verfahrensschritt bei der Herstellung einer Sicherungsschraube 1. Zunächst wird ein Schraubenrohling mit herkömmlichem, d.h. regelmäßigem Außengewinde bereitgestellt. Dieses ursprüngliche Außengewinde wird dann zu dem gezeigten Außengewinde 3 partiell deformiert, und zwar indem, hier zwei, Gewindezähne 7 in die gemeinsame (erste) Axialrichtung 8 (Einschraubrichtung) deformiert, d.h. hier umgebogen werden, so dass insgesamt zwei Sicherungsgewindegangwindungen 6 entstehen, von denen die rechte von zwei in Einschraubrichtung 8 deformierten Gewindezähnen 7 begrenzt wird und die in der Zeichnungsebene linke Sicherungsgewindegangwindung 6 von dem nicht deformierten (linken) Gewindezahn 9 und dem rechten, deformierten Gewindezahn 7. Wie auch bei den vorangehenden Ausführungsbeispielen ist der die deformierten Sicherungsgewindegangwindungen 6 rechts begrenzende Gewindezahn 10 nicht deformiert. Das Außengewinde 3 weist keinen einzigen, in eine der ersten Axialrichtung 8 entgegengesetzte Axialrichtung, d.h. in Richtung des nicht dargestellten Schraubenkopfes bzw. in Zugbelastungsrichtung deformierten Gewindezahn auf.

Fig. 4 zeigt ein Ausführungsbeispiel einer Sicherungsschraube 1 mit einer abgewickelten Darstellung des Außengewindes 3. Zu erkennen sind insgesamt zwei axial unmittelbar benachbarte Sicherungsgewindegangwindungen 6, die sich dadurch auszeichnen, dass mindestens ein die Sicherungsgewindegangwindungen 6 axial begrenzender Gewindezahn 7 in das entsprechende Querschnittsprofil einer der Sicherungsgewindegangwindungen 6 hinein verdrängt ist. Die gestrichelte Darstellung 7' zeigt die unverformte, d.h. nicht deformierte Position der deformiert dargestellten Gewindezähne 7.

Zu erkennen ist, dass auch bei dem Ausführungsbeispiel gemäß Fig. 4 kein einziger Gewindezahn in eine zweite, der ersten Axialrichtung 8 (Einschraubrichtung) entgegengesetzte Axialrichtung, d.h. entgegen der Einschraubrichtung verdrängt ist. Die beiden die deformierten Gewindezähne 7 axial sandwichartig zwischen sich aufnehmenden Gewindezähne 9, 10 sind nicht deformiert, d.h. regelmäßig belassen.

Es ist nicht zwingend notwendig, die Gewindezähne 7, wie in Fig. 4 dargestellt, über ihre gesamte Umfangsstreckung in einer Axialrichtung zu deformieren, sondern es reicht grundsätzlich auch aus, diese nur über einen Teil (Abschnitt) ihrer Umfangsstreckung in eine Axialrichtung, im Falle von zwei deformierten Gewindezähnen in die gemeinsame Axialrichtung zu deformieren, wobei eine Deformierung des jeweils selben Gewindezahns oder eines axial benachbarten Gewindezahns in die entgegen gesetzte Axialrichtung vermieden werden soll.

In Fig. 3 ist der Deformierungsverfahrensschritt zur Deformierung der Gewindezähne 7 im Nachhinein gezeigt. Zum Deformieren der Gewindezähne 7 ist ein Deformierwerkzeug 12 mit einem Deformierzahn (Deformierfortsatz) vorgesehen. Dieser ist in dem gezeigten Ausführungsbeispiel feststehend angeordnet und die Sicherungsschraube 1 wird in Pfeilrichtung 13 verdreht und dabei in eine zweite, der ersten Axialrichtung 8 entgegengesetzte Axialrichtung 14 axialkraftbeaufschlagt. Hierdurch wird zumindest der radial äußere Teil der Gewindezähne 7 in die jeweils benachbarten, zu einer Sicherungsgewindegangwindung 6 werdenden Gewindegangwindung und zwar in Einschraubrichtung hineinverdrängt.

Bei einer nicht gezeigten, ebenfalls realisierbaren alternativen Ausführungsvariante kann der deformierte Gewindezahn 7 gemäß Fig. 1 einen axial äußersten Gewindezahn bilden, ebenso wie einer der deformierten Gewindezähne 7 gemäß den Fig. 2 bis 4.

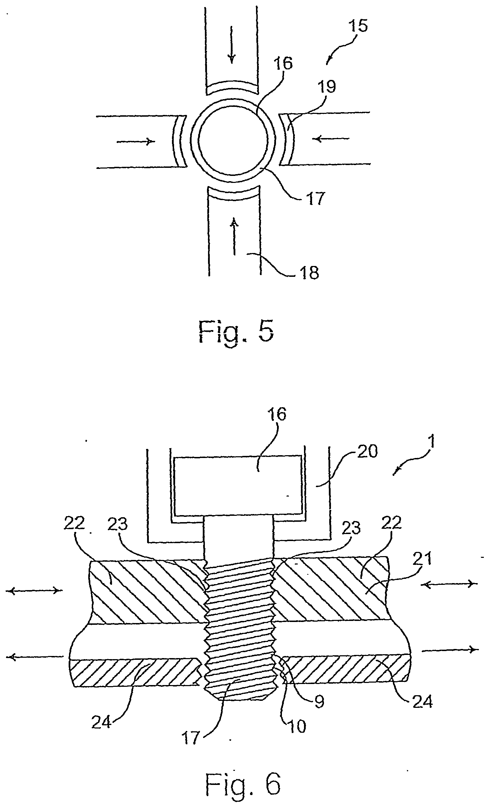

In Fig. 5 ist in einer unvollständigen, schematischen Darstellung eine Vorrichtung 15 zur Herstellung einer, beispielsweise wie in den Fig. 1 bis 4 gezeigten Sicherungsschraube dargestellt. Die Vorrichtung 15 ist derart ausgebildet, dass mit dieser ausschließlich ein Gewindezahn oder mehrere, insbesondere axial unmittelbar hintereinander angeordnete, Gewindezähne eines Schraubenrohlings 16 in Einschraubrichtung deformierbar ist/sind. Zu diesem Zweck ist eine in Fig. 5 nicht gezeigte Halterung vorgesehen, mittels der der Schraubenrohling 16 drehfest durch Eingreifen in das Normaußengewinde 17 gehalten werden kann, während die eigentliche Deformierung des Gewindezahns oder der Gewindezähne durch Stempelsegmente 18, in dem gezeigten Ausführungsbeispiel vier Stempelsegmente 18 erfolgt, die gleichmäßig in Umfangsrichtung beabstandet sind und die in radialer Richtung, was durch die Pfeile angedeutet ist, relativ zu dem Schraubenrohling 16 auf diesen zu verstellbar sind. Die Stempelsegmente 18 weisen jeweils an ihrem radial inneren Ende einen gekrümmten Deformierabschnitt 19 auf, der derart ausgeformt ist, dass sich mit diesem der ausschließlich eine Gewindezahn oder die mehreren Gewindezähne in die ausschließlich eine Axialrichtung und zwar in die Einschraubrichtung deformieren lassen. Durch die Wahl der Axialposition der Stempelsegmente 18 ist der Grad der Deformierung einstellbar.

In Fig. 6 ist eine teilgeschnittene Darstellung einer Vorrichtung 1 zum Deformieren eines Normaußengewindes 17 eines Schraubenrohlings 16 gezeigt. Dieser kann mittels einer geeigneten Robotik 20 oder alternativ manuell in die Vorrichtung 15 eingebracht werden. Die Vorrichtung 15 umfasst eine Halterung 21 zum drehfesten Halten des Schraubenrohlings 16, wobei die Halterung 21 in dem gezeigten Ausführungsbeispiel mehrere in Umfangsrichtung nebeneinander angeordnete, in radialer Richtung verstellbare Haltebacken 22 aufweist, die radial innen mit dem Norm-Außengewinde 17 korrespondierende Norm-Innengewindeabschnitte 23 aufweisen, die in das Norm-Außengewinde 17 durch radiales Verstellen der Haltebacken 22 eingreifen können. Nachdem der Schraubenrohling 16 drehfest fixiert wurde, kann ein Gewindezahn, in dem gezeigten Ausführungsbeispiel zwei unmittelbar benachbarte Gewindezähne 9, 10, in Einschraubrichtung, d.h. weg vom Schraubenkopf deformiert werden und zwar mit Hilfe von gleichmäßig über den Umfang verteilt angeordneten Stempelsegmenten 24, die radial innen geeignet ausgeformt sind. Beispielsweise können die Stempelsegmente 24 radial innen mit einem geeigneten Innengewindeabschnitt versehen sein, beispielsweise auch einem Norm-Innengewindeabschnitt 23, wobei durch die Wahl des Axialabstandes zwischen den Stempelsegmenten 24 und den Haltebacken 22 der Grad der Deformierung des Gewindezahnes oder der Gewindezähne eingestellt werden kann. In dem gezeigten Ausführungsbeispiel greifen die Stempelsegmente 24 mit ihren radial inneren Abschnitten an den in der Zeichnungsebene nach oben gerichteten Flanken der Gewindezähne 9, 10 an und beaufschlagen diese durch radiales Verstellen der Stempelsegmente 24 mit einer Deformationskraft in Richtung der Zeichnungsebene nach unten, also in Einschraubrichtung.

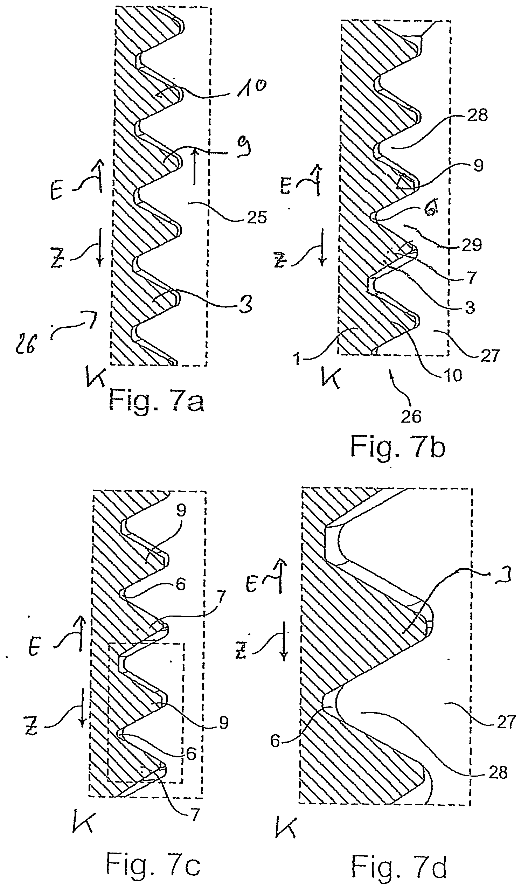

In den Fig. 7a bis 7d kennzeichnet K die Position des aus Übersichtlichkeitsgründen nicht dargestellten Schraubenkopfes der Sicherungsschraube 1.

In Fig. 7a ist eine Schraubverbindung 26 nach dem Stand der Technik gezeigt. Zu erkennen ist, dass das Außengewinde 3 der Schraube keinen Sicherungsgewindegang aufweist, so dass sämtliche Gewindezähne 9, 10 der Schraube mit ausschließlich einer entgegen der Einschraubrichtung E orientierten Flanke an jeweils einer gegenüberliegenden, in der Einschraubrichtung E orientierten Flanke des Innengewindes eines Gegengewindeelementes 25 anliegen. Eine Anlage an den jeweils anderen, d.h. in Einschraubrichtung E orientierten Flanken ist aufgrund des Axialspiels alternativ möglich.

Fig. 7b zeigt ein Ausführungsbeispiel einer erfindungsgemäßen Schraubverbindung 26, umfassend eine Sicherungsschraube 1 und ein Innengewindeelement 27 mit einem Norm-Innengewinde 28. Das Außengewinde 3 der Sicherungsschraube 1 weist einen einzigen, in eine Axialrichtung, nämlich in der Einschraubrichtung E, deformierten Gewindezahn 7 auf, der in eine Sicherungsgewindegangwindung 6 hinein verdrängt ist, so dass diese im Vergleich zu den übrigen Gewindegangwindungen verengt ist, mit der Folge, dass ein in der Sicherungsgewindegangwindung 6 eingreifender Norm-Innengewindezahn 29 auf beiden Flankenseiten an jeweils einem Gewindezahn des Außengewindes 3 der Sicherungsschraube 1 anliegt, nämlich an dem deformierten Gewindezahn 7 und an dem axial benachbarten Gewindezahn 9. Der nicht deformierte Gewindezahn 9, also der Norm-Gewindezahn 9 und der in Richtung des NormGewindezahns 9 deformierte Gewindezahn 7 begrenzen also die Sicherungsgewindegangwindung 6. Sämtliche Gewindezähne außer der deformierte Gewindezahn 7 sind mit dem Norm-Innengewinde 28 korrespondierende Norm-Außengewindezähne. Diese Norm-Außengewindezähne liegen bei angezogener, d.h. auf Zug belasteter Sicherungsschraube 1 mit den dem Kopf K zugewandten Flanken an dem Innengewinde des Innengewindeelementes an. Aufgrund des deformierten Gewindezahns 7, der sich mit der in Einschraubrichtung orientierten Flanke am Innengewinde des Innengewindeelementes abstützt, stützt sich die Sicherungsschraube 1 somit in beide Axialrichtungen ab, wodurch das Spiel aus der Schraubverbindung 26 herausgenommen ist (im Gegensatz zu Fig. 7a).

Bei dem Ausführungsbeispiel gemäß Fig. 7c sind zwei über mehrere Norm-Gewindezähne beabstandete, in Einschraubrichtung E deformierte Gewindezähne 7 vorgesehen, die jeweils mit einem axial benachbarten Norm-Gewindezahn 9 eine Sicherungsgewindegangwindung 6 begrenzen. Die beiden deformierten Gewindezähne 7 sind also über einen nicht deformierten Norm-Gewindezahn 9 voneinander beabstandet, wobei alternativ auch mehrere deformierte Gewindezähne unmittelbar axial benachbart vorgesehen sein könnten. Wie sich deutlich aus der Detailvergrößerung gemäß Fig. 7d eines Details aus Fig. 7c ergibt, liegen beide die Sicherungsgewindegänge 6 begrenzenden, aneinander gegenüberliegenden Flanken an jeweils einer Flanke eines Norm-Innengewindezahns 28 des Innengewindeelementes 27 an, wodurch die Bremswirkung erzielt wird, bzw. dadurch, dass alle nicht deformierten Gewindezähne mit der jeweils den Kopf K der Sicherungsschraube 1 zugewandten Flanke an eine Gegenflanke des Innengewindes anliegen und die deformierten Zähne mit ihrer vom Kopf K abgewandten, d.h. in Einschraubrichtung E orientierten Flanke am Innengewinde, so dass kein Spiel in der Schraubverbindung verbleibt.

Bei einer alternativen, in den Fig. 7a bis 7d nicht dargestellten, jedoch in Fig. 4 gezeigten Ausführungsvariante sind zwei unmittelbar benachbarte Gewindezähne 7 in die Einschraubrichtung E, d.h. entgegen der Zugkraftbelastungsrichtung Z deformiert, wobei die Gruppe der zwei oder mehr unmittelbar benachbarten, deformierten Gewindezähne 7 axial an mindestens einen Norm-Gewindezahn 9 angrenzt.

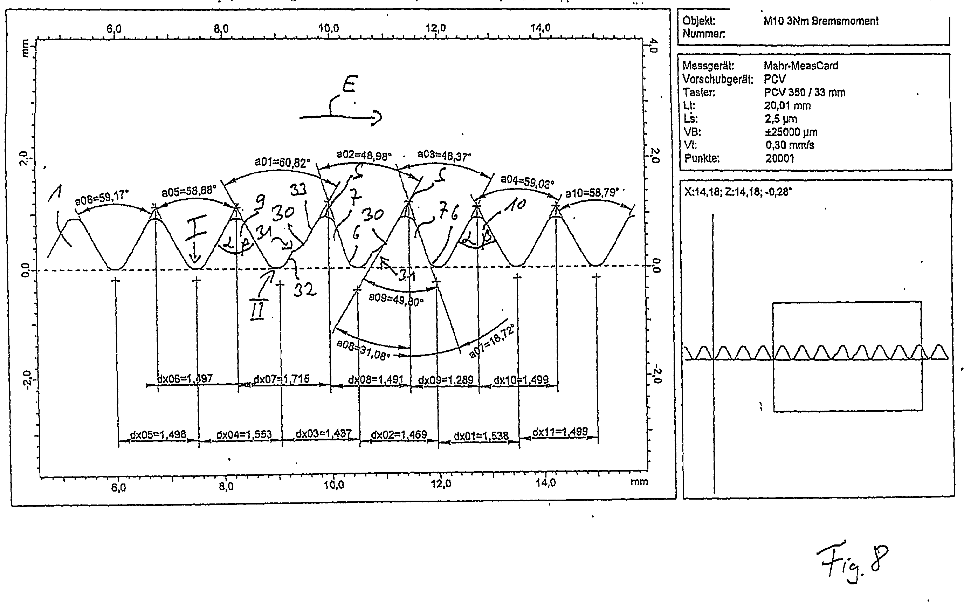

In Fig. 8 bis 10 sind Messprotokolle bzw. Abtastergebnisse von unterschiedlichen Ausführungsbeispielen von Sicherungsschrauben 1 gezeigt. In der linken Zeichnungshälfte der Fig. 8 bis 10 ist der jeweils in der rechten Zeichnungshälfte markierte Ausschnitt der Messung vergrößert dargestellt. Bei sämtlichen Ausführungsbeispielen sind zwei axial unmittelbar benachbarte Gewindezähne 7 in Einschraubrichtung E deformiert und begrenzen in der Zeichnungsebene rechts, d.h. in Einschraubrichtung E jeweils einen Sicherungsgewindegang 6 die zu der Gruppe von deformierten Gewindezähnen 7 benachbarten Gewindezähne 9, 10 sind nicht deformiert. Es handelt sich um, hier metrische, Norm-Gewindezähne, deren Flankenwinkel α, β zwischen jeweils einer Gewindeflanke und einer Radialebene 30° betragen. Es gilt α = β.

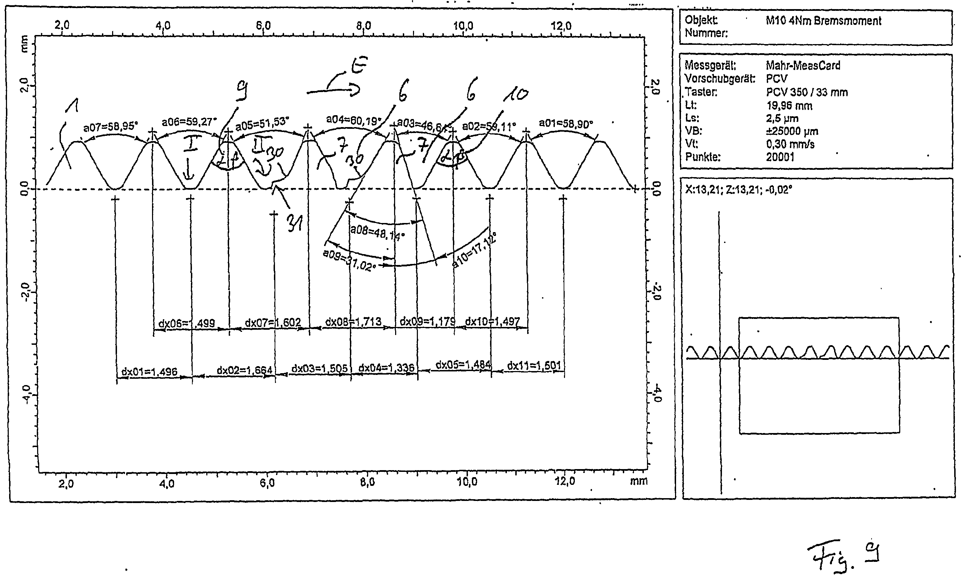

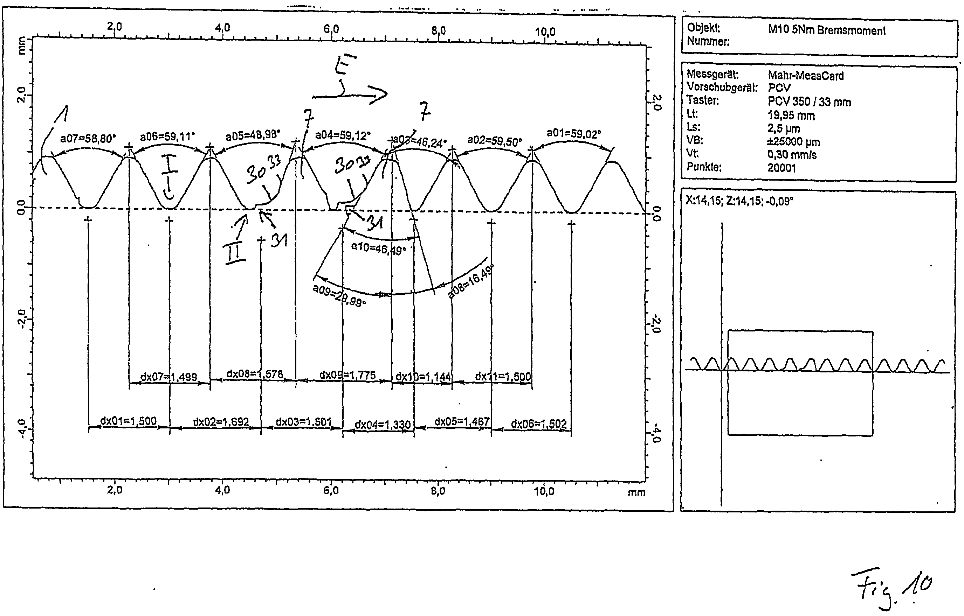

Die Gewindezähne 7 sind in dem gezeigten Ausführungsbeispiel definiert durch Axialkraftbeaufschlagen mittels eines nicht gezeigten, in radialer Richtung verstellbaren Stempels verformt, wobei alternativ auch Rollierwalzen oder Backenwerkzeuge eingesetzt werden können. Die Deformation wurde nachträglich an einer fertigen Schraube (Schraubenrohling mit Gewinde) durchgeführt, die vor der Deformation bereits gehärtet war. Die Ausführungsbeispiele (Fig. 8 bis 10) unterscheiden sich hinsichtlich deren Herstellung dadurch, dass das in radialer Richtung betätigbare Stempelwerkzeug mit unterschiedlichen Drehmomenten (erzeugt über einen Drehmomentschlüssel) beaufschlagt wurde, und zwar beim Ausführungsbeispiel gemäß Fig. 8 mit 3Nm, im Ausführungsbeispiel gemäß Fig. 9 mit 4Nm und bei dem Ausführungsbeispiel gemäß Fig. 10 mit 5Nm. Folglich war die Eindringtiefe des Stempelwerkzeugs in radialer Richtung nach innen unterschiedlich groß.

Bei dem Ausführungsbeispiel gemäß Fig. 8 ist deutlich zu erkennen, dass die entgegen der Einschraubrichtung E orientierten Flanken 30 der deformierten Gewindezähne 7, 7 gestuft ausgebildet sind, also einen Stufenabschnitt 31 aufweisen, der radial beabstandet ist vom Scheitelpunkt S (radial äußerster Punkt) des jeweiligen, deformierten Gewindezahns 7. Der Stufenabschnitt 31 trennt einen unteren, im Wesentlichen nicht deformierten Flankenabschnitt 32 von einem oberen, axial verschobenen Flankenabschnitt 33, der zumindest näherungsweise in Einschraubrichtung E parallel verschoben ist. Der Flankenwinkel a08 des oberen Flankenabschnitts 33 bezogen auf eine Radialebene beträgt 31,08°. Der Flankenwinkel (z.B. a04/2) einer nicht deformierten Flanke beträgt etwa 30°, ebenso wie der Flankenwinkel des unteren, nicht deformierten Flankenabschnittes 32. Der weitere Flankenwinkel a07 der deformierten Gewindezähne beträgt in dem gezeigten Ausführungsbeispiel 18,72°, so dass die Summe der beiden Flankenwinkel a08 und a07 etwa 50°, genauer a09 = 49,80° beträgt. Der Flankenwinkel a09 beträgt also etwa 10° weniger als die Summe der Flankenwinkel α und β eines nicht deformierten Gewindezahns 9, 10. In dem gezeigten Ausführungsbeispiel ist zu erkennen, dass zwischen dem Gewindezahn 9 und dem ersten deformierten Gewindezahn 7 ein Gewindesteigungssprung realisiert ist, und zwar im Vergleich zu der Gewindesteigung der Norm-Gewindeabschnitte. Die Steigung zwischen dem Grund I einer Norm-Gewindegangwindung und dem Grund II der zum Sicherungsgewindegang 6 benachbarten Gewindegangwindung beträgt dx04 = 1,553, wohingegen die Steigung bei den Norm-Gewindegängen etwa 1,500 beträgt (z.B. dx11 = 1,499).

Bei dem Ausführungsbeispiel gemäß Fig. 9 ist der vorgenannte Steigungssprung, hier dx02 = 1,664 noch markanter. Zu erkennen ist auch, dass der Stufenabschnitt 31 wesentlich weiter nach radial innen versetzt ist, so dass hier schon davon gesprochen werden kann, dass näherungsweise (mehr als 2/3) die gesamte entgegen der Einschraubrichtung E orientierte Flanke 30 parallel verschoben ist. Zu erkennen ist dies an dem Flankenwinkel a09 = 31,02°. Die Summe der Flankenwinkel a09 und a10 der deformierten Gewindezähne 7 beträgt etwa 48°. Die Summe der Flankenwinkel α, β der nicht deformierten Norm-Gewindezähne beträgt etwa 60° (z.B. a01 = 58,9°)

Bei dem Ausführungsbeispiel gemäß Fig. 10 ist im Wesentlichen die gesamte entgegen der Einschraubrichtung orientierte Flanke 30 der deformierten Gewindezähne 7 parallel verschoben in Einschraubrichtung E. Es ist lediglich in einem radial unteren Bereich ein Stufenabschnitt 31 realisiert, der zu einem erheblichen Steigungsvorsprung dx02 = 1,692 zwischen dem Grund I und dem Grund II führt (Normalsteigung etwa 1,500). Zu erkennen ist, dass der Flankenwinkel a09 zwischen der Flanke 30, genauer zwischen dem oberen Flankenabschnitt 33 der Flanke 30 und einer Radialebene 29,99° beträgt. Der weitere Flankenwinkel a08 der deformierten Gewindezähne beträgt 16,49°, was zu einem Gesamtwinkel a10 = 46,49° führt.

Bei den Ausführungsbeispielen gemäß den Fig. 8 bis 10 ist also zu verzeichnen, dass entgegen der AT 338 572 die deformierten Gewindezähne nicht nur gedreht, sondern zusätzlich komplett, zumindest in einem oberen Flankenabschnitt in axialer Richtung verschoben sind. Wesentlich ist also eine zumindest näherungsweise, zumindest abschnittsweise Parallelverschiebung der entgegen der Einschraubrichtung E orientierten Flanken realisiert ist.

### Bezugszeichenliste

- 1: Sicherungsschraube
- 2: Körper
- 3: Außengewinde
- 4: Gewindegangwindungen
- 5: Gewindegang
- 6: Sicherungsgewindegangwindung
- 7: deformierte Gewindezähne
- 7': ursprüngliche Form der deformierten Gewindezähne
- 8: erste Axialrichtung (Einschraubrichtung)
- 9: Gewindezahn
- 10: Gewindezahn
- 11: Gewindegangwindung
- 12: Deformierwerkzeug
- 13: Pfeilrichtung (Drehrichtung)
- 14: zweite Axialrichtung (Zugbelastungsrichtung)
- 15: Vorrichtung
- 16: Schraubenrohling
- 17: Norm-Außengewinde
- 18: Stempelsegmente
- 19: Deformierabschnitt
- 20: Robotik
- 21: Halterung
- 22: Haltebacken
- 23: Norm-Innengewindeabschnitt
- 24: Stempelsegmente
- 25: Gegengewindeelement
- 26: Schraubverbindung
- 27: Innengewindeelement
- 28: Norm-Innengewinde
- 29: Norm-Innengewindezahn
- 30: Flanken
- 31: Stufenabschnitt
- 32: unterer Flankenabschnitt
- 33: oberer Flankenabschnitt

- E: Einschraubrichtung
- K: Position des Sicherungsschraubenkopfes
- S: Scheitelpunkt

- I: Grund
- II: Grund

## Patentansprüche

1. Sicherungsschraube für eine Schraubverbindung, mit einem Körper (2) mit Außengewinde (3) mit mindestens einer von zwei Gewindezähnen (9, 7) begrenzten Sicherungsgewindegangwindung (6), deren Querschnittsprofil im Vergleich zu dem Querschnittsprofil mindestens einer weiteren Norm-Gewindegangwindung (11), vorzugsweise im Vergleich zu mehreren weiteren Norm-Gewindegangwindungen (11), bevorzugt im Vergleich zu der überwiegenden Anzahl von Norm-Gewindegangwindungen (11), zum Erhöhen des Kraftschlusses einer die Sicherungsschraube (1) aufweisenden Schraubverbindung verformt ist, wobei ausschließlich einer der die Sicherungsgewindegangwindung (6) begrenzenden Gewindezähne (9, 7) ausschließlich in Einschraubrichtung (E, 8) der Sicherungsschraube (1) deformiert ist und die zu dem deformierten Gewindezahn (7) benachbarten Gewindezähne (9, 10) nicht deformiert sind, oder wobei beide die Sicherungsgewindegangwindung (6) begrenzenden Gewindezähne (7, 7) ausschließlich in Einschraubrichtung (E, 8) der Sicherungsschraube (1) deformiert sind, wobei der ausschließlich eine Gewindezahn (7) über seine gesamte Umfangserstreckung deformiert ist, bzw. wobei die beiden Gewindezähne (7, 7) jeweils über ihre gesamte Umfangserstreckung deformiert sind, **dadurch gekennzeichnet, dass** der ausschließlich eine in Einschraubrichtung (E, 8) deformierte Gewindezahn (7) bzw. die deformierten Gewindezähne (7, 7) derart in Einschraubrichtung (E, 8) deformiert ist/sind, dass die entgegen der Einschraubrichtung (E, 8) weisende Gewindezahnflanke/en des deformierten Gewindezahns (7) bzw. der deformierten Gewindezähne (7, 7) vollständig oder abschnittsweise in Einschraubrichtung (E, 8) zumindest näherungsweise, parallel verschoben ist/sind.

2. Sicherungsschraube nach Anspruch 1,
**dadurch gekennzeichnet,**
**dass** mindestens zwei Sicherungsgewindegangwindungen (6) unmittelbar axial benachbart sind.

3. Sicherungsschraube nach einem der vorhergehenden Ansprüche, **dadurch gekennzeichnet,**
**dass** zwei Sicherungsgewindegangwindungen (6) über mindestens eine nicht verformte Gewindegangwindung (11) axial voneinander beabstandet sind.

4. Sicherungsschraube nach einem der vorhergehenden Ansprüche, **dadurch gekennzeichnet,**
**dass** die Summe der beiden Flankenwinkel (a09 = a07+ a08) des mindestens einen deformierten Gewindezahns (7) kleiner ist, vorzugsweise mindestens 8° kleiner ist, weiter bevorzugt mindestens 10° kleiner ist, noch weiter bevorzugt mindestens 15° kleiner ist als die Summe der beiden Flankenwinkel (α,β) der nicht deformierten Gewindezähne (9, 10).

5. Sicherungsschraube nach einem der vorhergehenden Ansprüche, **dadurch gekennzeichnet,**
**dass** die entgegen der Einschraubrichtung (E, 8) orientierte Gewindeflanke (30) des ausschließlich einen in Einschraubrichtung (E, 8) deformierten Gewindezahns (7) bzw. dass die entgegen der Einschraubrichtung (E, 8) orientierten Gewindezahnflanken (9, 10) der in Einschraubrichtung (E, 8) deformierten Gewindezähne (7, 7) jeweils eine Stufe aufweist/aufweisen.

6. Sicherungsschraube nach einem der vorhergehenden Ansprüche, **dadurch gekennzeichnet,**
**dass** die entgegen der Einschraubrichtung (E, 8) orientierte, zumindest näherungsweise in Einschraubrichtung (E, 8) parallel verschobene Gewindezahnflanke (30) derart parallel verschoben ist, dass der Flankenwinkel, zumindest in einen radial äußeren Flankenabschnitt, zu einer Radialebene maximal 20%, vorzugsweise 15%, bevorzugt maximal 10%, noch weiter bevorzugt maximal 5% größer oder kleiner ist als der entgegen der Einschraubrichtung (E, 8) weisende Flankenwinkel eines nicht deformierten Gewindezahns (9, 10) bzw. dass die entgegen der Einschraubrichtung (E) orientierten, zumindest nährungsweise in Einschraubrichtung (E, 8) parallel verschobenen Gewindezahnflanken (30) derart parallel verschoben sind, dass deren Flankenwinkel, zumindest in einen radial äußeren Flankenabschnitt (33), zu einer Radialebene maximal 20%, vorzugsweise maximal 15%, bevorzugt maximal 10%, noch weiter bevorzugt maximal 5% größer oder kleiner ist als der entsprechende Flankenwinkel eines nicht deformierten Gewindezahnes (9, 10).

7. Sicherungsschraube nach einem der vorhergehenden Ansprüche, **dadurch gekennzeichnet,**
**dass** der ausschließlich eine in Einschraubrichtung (E, 8) deformierte Gewindezahn (7) bzw. die in Einschraubrichtung (E, 8) deformierten Gewindezähne vollständig in Einschraubrichtung (E, 8) axial verschoben sind.

8. Sicherungsschraube nach Anspruch 5,
**dadurch gekennzeichnet,**
**dass** zwischen Stufenabschnitten (32, 33) der jeweils einen Stufe ein gerundeter Übergang vorgesehen ist.

9. Sicherungsschraube nach einem der vorhergehenden Ansprüche,
**dadurch gekennzeichnet,**
**dass** die Sicherungsgewindegangwindung (6) und/oder die Sicherungsgewindegangwindungen (6) jeweils in mindestens zwei Abschnitten ihrer Umfangserstreckung nicht oder geringfügiger deformiert ist/sind, als in einem anderen Abschnitt der Umfangserstreckung.

10. Schraubverbindung mit einer Sicherungsschraube (1) nach einem der vorhergehenden Ansprüche, die mit einem, vorzugsweise ein Norm- bzw. Regelinnengewinde aufweisenden, Innengewindeelement verschraubt ist, insbesondere derart, dass der mindestens eine deformierte Gewindezahn, vorzugsweise ausschließlich, elastisch verformt ist.

11. Verfahren zum Herstellen einer Sicherungsschraube (1) nach einem der Ansprüche 1 bis 9,
wobei zunächst ein, vorzugsweise gehärteter, Schraubenrohling mit regelmäßigem Norm-Außengewinde (3) bereitgestellt und anschließend ausschließlich einer der die Sicherungsgewindegangwindung (6) begrenzenden Gewindezähne (9, 7) in Einschraubrichtung (E, 8) deformiert wird und die zu dem deformierten Gewindezahn (7) axial benachbarten Norm-Gewindezähne (9, 10) regelmäßig belassen werden, oder dass beide die Sicherungsgewindegangwindung (6) begrenzenden Gewindezähne (7, 7) ausschließlich in Einschraubrichtung (E, 8) relativ zu zumindest einem weiteren Norm-Gewindezahn deformiert werden, derart, dass der ausschließlich eine in Einschraubrichtung (E, 8) deformierte Gewindezahn (7) bzw. die deformierten Gewindezähne (7, 7) derart in Einschraubrichtung (E, 8) deformiert ist/sind, dass die entgegen der Einschraubrichtung (E, 8) weisende Gewindezahnflanke/en des deformierten Gewindezahns (7) bzw. der deformierten Gewindezähne (7, 7) vollständig oder abschnittsweise in Einschraubrichtung (E, 8) zumindest näherungsweise, parallel verschoben ist/sind.

12. Verfahren nach Anspruch 11,
**dadurch gekennzeichnet,**
**dass** das Deformieren durch axiales Kraftbeaufschlagen des mindestens einen Gewindezahns (7), vorzugsweise während einer drehenden Relativbewegung der Sicherungsschraube (1) zu einem Deformierwerkzeug, insbesondere einer Rollierwalze oder einer Rollierbacke, durchgeführt wird.

13. Verfahren nach einem der Ansprüche 11 oder 12,
**dadurch gekennzeichnet,**
**dass** der ausschließlich eine die Sicherungsgewindegangwindung (6) begrenzende Gewindezahn (7) oder beide die Sicherungsgewindegangwindung (6) begrenzenden Gewindezähne (7, 7) mittels mindestens zwei, vorzugsweise vier, in Umfangsrichtung nebeneinander angeordneten, in radialer Richtung auf den Schraubenrohling (16) zu verstellbaren Stempelsegmenten (24) verformt wird/werden.

14. Verfahren nach einem der Ansprüche 11 bis 13,
**dadurch gekennzeichnet,**
**dass** der Schraubenrohling (16) und die Stempelsegmente (24) während des Verformens drehfest angeordnet sind.

15. Verfahren nach einem der Ansprüche 11 bis 14,
**dadurch gekennzeichnet,**
**dass** das Verformen derart durchgeführt wird, dass die entgegen der Einschraubrichtung (E, 8) orientierte Gewindeflanke (30) des ausschließlich einen in Einschraubrichtung (E, 8) deformierten Gewindezahns (7) bzw. dass die entgegen der Einschraubrichtung (E, 8) orientierten Gewindezahnflanken (9, 10) der in Einschraubrichtung (E, 8) deformierten Gewindezähne (7, 7) jeweils eine Stufe aufweist/aufweisen.

## Claims

1. A safety screw for a screw connection, comprising a body (2) having an external thread (3) having at least one safety thread winding (6) delimited by two thread teeth (9, 7), the cross-sectional profile of said safety thread winding being deformed compared to the cross-sectional profile of at least one further standard thread winding (11), preferably compared to several further standard thread windings (11), preferably compared to the predominant number of standard thread windings (11), in order to increase the traction of a screw connection comprising the safety screw (1), wherein only one of the thread teeth (9, 7) delimiting the safety thread winding (6) is deformed exclusively in the screwing direction (E, 8) of the safety screw (1), and the thread teeth (9, 10) adjacent to the deformed thread tooth (7) are not deformed, or wherein both thread teeth (7, 7) delimiting the safety thread winding (6) are deformed exclusively in the screwing direction (E, 8) of the safety screw (1), wherein the only one thread tooth (7) is deformed over its entire circumferential extent, or respectively wherein the two thread teeth (7, 7) are deformed respectively over their entire circumferential extent,
**characterized in that**
the only one thread tooth (7), deformed in screwing direction (E, 8) or respectively the deformed thread teeth (7, 7) is/are deformed in screwing direction (E, 8), such that the thread tooth flank(s), pointing contrary to the screwing direction (E, 8), of the deformed thread tooth (7) or respectively of the deformed thread teeth (7, 7) is/are displaced completely or partially in screwing direction (E, 8) at least approximately, in a parallel manner.

2. The safety screw according to Claim 1,
**characterized in that**
at least two safety thread windings (6) are immediately axially adjacent.

3. The safety screw according to one of the preceding claims,
**characterized in that**
two safety thread windings (6) are spaced axially from one another over at least one non-deformed thread winding (11).

4. The safety screw according to one of the preceding claims,
**characterized in that**
the total of the two flank angles (a09 = a07 + a08) of the at least one deformed thread tooth (7) is smaller, preferably at least 8° smaller, further preferably at least 10° smaller, still further preferably at least 15° smaller than the total of the two flank angles (α,β) of the non-deformed thread teeth (9, 10).

5. The safety screw according to one of the preceding claims,
**characterized in that**
the thread flank (30), oriented contrary to the screwing direction (E, 8), of the only one thread tooth (7), deformed in screwing direction (E, 8) or respectively that the thread flanks (9, 10), oriented contrary to the screwing direction (E, 8), of the thread teeth (7, 7) deformed in screwing direction (E, 8) has/have respectively a step.

6. The safety screw according to one of the preceding claims,
**characterized in that**
the thread tooth flank (30), oriented contrary to the screwing direction (E, 8), displaced in a parallel manner at least approximately in the screwing direction (E, 8), is displaced in a parallel manner such that the flank angle, at least in a radially outer flank section, to a radial plane is a maximum of 20%, advantageously 15%, preferably a maximum of 10%, still further preferably a maximum of 5% greater or smaller than the flank angle, pointing contrary to the screwing direction (E, 8), of a non-deformed thread tooth (9, 10) or respectively that the thread tooth flanks (30), oriented contrary to the screwing direction (E), displaced in a parallel manner at least approximately in screwing direction (E, 8), are displaced in a parallel manner such that the flank angle thereof, at least in a radially outer flank section (33), to a radial plane is a maximum of 20%, advantageously a maximum of 15 %, preferably a maximum of 10%, still further preferably a maximum of 5% greater or smaller than the corresponding flank angle of a non-deformed thread tooth (9, 10).

7. The safety screw according to one of the preceding claims,
**characterized in that**
the only one thread tooth (7) deformed in screwing direction (E, 8) or respectively the thread teeth deformed in screwing direction (E, 8) are displaced axially completely in screwing direction (E, 8).

8. The safety screw according to Claim 5,
**characterized in that**
a rounded transition is provided between step sections (32, 33) of the respectively one step.

9. The safety screw according to one of the preceding claims,
**characterized in that**
the safety thread winding (6) and/or the safety thread windings (6) is/are not or more slightly deformed respectively in at least two sections of their circumferential extent than in another section of the circumferential extent.

10. A screw connection with a safety screw (1) according to one of the preceding claims, which is screwed with an internal thread element preferably having a standard or respectively regular internal thread, in particular such that the at least one deformed thread tooth is, preferably exclusively, elastically deformed.

11. A method for producing a safety screw (1) according to one of Claims 1 to 9,
wherein firstly a, preferably hardened, screw blank with a regular standard external thread (3) is provided and subsequently exclusively one of the thread teeth (9, 7) delimiting the safety thread winding (6) is deformed in screwing direction (E, 8), and the standard thread teeth (9, 10) axially adjacent to the deformed thread tooth (7) are left regular, or that both thread teeth (7, 7) delimiting the safety thread winding (6) are deformed exclusively in screwing direction (E, 8) relative to at least one further standard thread tooth, such that the only one thread tooth (7) deformed in screwing direction (E, 8) or respectively the deformed thread teeth (7, 7) is/are deformed in screwing direction (E, 8), such that the thread tooth flank(s), pointing contrary to the screwing direction (E, 8), of the deformed thread tooth (7) or respectively of the deformed thread teeth (7, 7) is/are displaced completely or partially in screwing direction (E, 8) at least approximately, in a parallel manner.

12. The method according to Claim 11,
**characterized in that**
the deforming is carried out by axial application of force of the at least one thread tooth (7), preferably during a rotating relative movement of the safety screw (1) to a deforming tool, in particular a roller-burnishing roller or a roller-burnishing jaw.

13. The method according to one of Claims 11 or 12, **characterized in that**
the only one thread tooth (7) delimiting the safety thread winding (6) or both thread teeth (7, 7) delimiting the safety thread winding (6) is/are deformed by means of at least two, preferably four, die segments (24), arranged adjacent to one another in circumferential direction, adjustable in radial direction towards the screw blank (16).

14. The method according to one of Claims 11 to 13, **characterized in that**
the screw blank (16) and the die segments (24) are arranged in a torque-proof manner during the deforming.

15. The method according to one of Claims 11 to 14, **characterized in that**
the deforming is carried out such that the thread flank (30), oriented contrary to the screwing direction (E, 8), of the only one thread tooth (7) deformed in screwing direction (E, 8), or respectively that the thread tooth flanks (9, 10), oriented contrary to the screwing direction (E, 8), of the thread teeth (7, 7) deformed in screwing direction (E, 8), has/have respectively a step.

## Revendications

1. Vis de fixation pour une liaison à vis, comprenant un corps (2) avec un filetage intérieur (3) avec au moins une spire de pas de filetage de fixation (6) limitée par deux dents de filetage (9, 7), dont le profil en section transversale, par comparaison avec le profil en section transversale d'au moins une spire de pas de filetage standard supplémentaire (11), de préférence par comparaison avec plusieurs spires de pas de Filetage standard supplémentaires (11), de préférence par comparaison avec la majorité des spires de pas de filetage standard (11), est déformé pour augmenter l'engagement par force d'une liaison à vis présentant la vis de fixation (1), exclusivement l'une des dents de filetage (9, 7) limitant la spire de pas de filetage de fixation (6) étant déformée exclusivement dans la direction de vissage (E, 8) de la vis de fixation (1) et les dents de filetage (9, 10) adjacentes à la dent de filetage déformée (7) n'étant pas déformées, ou les deux dents de filetage (7, 7) limitant la spire de pas de filetage de fixation (6) étant déformées exclusivement dans la direction de vissage (E, 8) de la vis de fixation (1), l'exclusivement une dent de filetage (7) étant déformée sur toute son étendue périphérique, ou
les deux dents de filetage (7, 7) étant à chaque fois déformées sur toute leur étendue périphérique,
**caractérisée en ce que**
l'exclusivement une dent de filetage (7) déformée, ou les dents de filetage déformées (7, 7), dans la direction de vissage (E, 8) étant déformée(s) dans la direction de vissage (E, 8) de telle sorte que le ou les flancs de dent de filetage de la dent de filetage déformée (7) ou des dents de filetage déformées (7, 7), qui est/sont tourné (s) à l'opposé de la direction de vissage (E, 8), soit/soient déplacé (s) complètement ou en partie, au moins approximativement parallèlement, dans la direction de vissage (E, 8).

2. Vis de fixation selon la revendication 1, **caractérisée en ce**
**qu'**au moins deux spires de pas de filetage de fixation (6) sont directement adjacentes axialement.

3. Vis de fixation selon l'une quelconque des revendications précédentes,
**caractérisée en ce que**
deux spires de pas de filetage de fixation (6) sont espacées axialement l'une de l'autre par au moins une spire de pas de filetage non déformée (11).

4. Vis de fixation selon l'une quelconque des revendications précédentes,
**caractérisée en ce que**
la somme des deux angles de flanc (a09 = a07 + a08) de l'au moins une dent de filetage déformée (7) est inférieure, de préférence est inférieure d'au moins 8°, plus préférablement est inférieure d'au moins 10°, et encore plus préférablement est inférieure d'au moins 15°, à la somme des deux angles de flanc (α, β) des dents de filetage non déformées (9, 10).

5. Vis de fixation selon l'une quelconque des revendications précédentes,
**caractérisée en ce que**
le flanc de filetage (30) de l'exclusivement une dent de filetage (7) déformée dans la direction de vissage (E, 8), orienté à l'encontre de la direction de vissage (E, 8), ou **en ce que** les flancs de filetage (9, 10) des dents de filetage (7, 7) déformées dans la direction de vissage (E, 8), orientés à l'encontre de la direction de vissage (E, 8), présente(nt) à chaque fois un gradin.

6. Vis de fixation selon l'une quelconque des revendications précédentes,
**caractérisée en ce que**
le flanc de dent de filetage (30) orienté à l'encontre de la direction de vissage (E, 8), déplacé au moins approximativement parallèlement dans la direction de vissage (E, 8), est déplacé parallèlement de telle sorte que l'angle de flanc au moins dans une portion de flanc radialement extérieure, par rapport à un plan radial, soit supérieur ou inférieur au maximum de 20 %, de préférence de 15 %, de préférence au maximum de 10 %, encore plus préférablement au maximum de 5 % à l'angle de flanc tourné à l'encontre de la direction de vissage (E, 8) d'une dent de filetage (9, 10) non déformée ou **en ce que** les flancs de dents de filetage (30) orientés à l'encontre de la direction de vissage (E), déplacés au moins approximativement parallèlement dans la direction de vissage (E, 8), sont déplacés parallèlement de telle sorte que leur angle de flanc, au moins dans une portion de flanc radialement extérieure (33), par rapport à un plan radial, soit supérieur ou inférieur au maximum de 20 %, de préférence au maximum de 15 %, de préférence au maximum de 10 %, encore plus préférablement au maximum de 5 % à l'angle de flanc correspondant d'une dent de filetage non déformée (9, 10).

7. Vis de fixation selon l'une quelconque des revendications précédentes,
**caractérisée en ce que**
l'exclusivement une dent de filetage (7) déformée dans la direction de vissage (E, 8) ou les dents de filetage déformées dans la direction de vissage (E, 8) sont complètement déplacées axialement dans la direction de vissage (E, 8).

8. Vis de fixation selon la revendication 5, **caractérisée en ce**
**qu'**entre des portions de gradin (32, 33) d'un gradin respectif est prévue une transition arrondie.

9. Vis de fixation selon l'une quelconque des revendications précédentes,
**caractérisée en ce que**
la spire de pas de filetage de fixation (6) et/ou les spires de pas de filetage de fixation (6) n'est ou ne sont pas déformées ou est/sont moins déformées à chaque fois dans au moins deux portions de leur étendue périphérique que dans une autre portion de l'étendue périphérique.

10. Liaison à vis comprenant une vis de fixation (1) selon l'une quelconque des revendications précédentes, qui est vissée à un élément de filetage interne présentant de préférence un filetage intérieur standard ou normal, en particulier de telle sorte que l'au moins une dent de filetage déformée soit de préférence exclusivement déformée élastiquement.

11. Procédé de fabrication d'une vis de fixation (1) selon l'une quelconque des revendications 1 à 9, dans lequel une ébauche de vis, de préférence trempée, est pourvue d'un filetage extérieur standard régulier (3) et ensuite exclusivement l'une des dents de filetage (9, 7) limitant la spire de pas de filetage de fixation (6) étant déformée dans la direction de vissage (E, 8) et les dents de filetage standard (9, 10) adjacentes axialement à la dent de filetage déformée (7) étant conservées régulièrement, ou en ce que les deux dents de filetage (7, 7) limitant la spire de pas de filetage de fixation (6) étant déformées exclusivement dans la direction de vissage (E, 8) par rapport à au moins une dent de filetage standard supplémentaire, de telle sorte que l'exclusivement une dent de filetage (7) déformée dans la direction de vissage (E, 8) ou les dents de filetage déformées (7, 7) soit/soient déformées dans la direction de vissage (E, 8) de telle sorte que le ou les flancs de dents de filetage tourné(s) à l'encontre de la direction de vissage (E, 8) de la dent de filetage déformée (7) ou des dents de filetage déformées (7, 7) soit/soient déplacé(s) complètement ou en partie au moins approximativement parallèlement dans la direction de vissage (E, 8).

12. Procédé selon la revendication 11,
**caractérisé en ce que**
la déformation est effectuée par une sollicitation par force axiale de l'au moins une dent de filetage (7), de préférence pendant un mouvement relatif de rotation de la vis de fixation (1) par rapport à un outil de déformation, en particulier un cylindre de roulage ou une mâchoire de roulage.

13. Procédé selon l'une quelconque des revendications 11 ou 12,
**caractérisé en ce que**
l'exclusivement une dent de filetage (7) limitant la spire de pas de filetage de fixation (6) ou les deux dents de filetage (7, 7) limitant la spire de pas de filetage de fixation (6) est/sont déformée(s) au moyen d'au moins deux, de préférence quatre, segments de poinçon (24) disposés les uns à côté des autres dans la direction périphérique, pouvant être déplacés dans la direction radiale vers l'ébauche de vis (16).

14. Procédé selon l'une quelconque des revendications 11 à 13,
**caractérisé en ce que**
l'ébauche de vis (16) et les segments de poinçon (24) sont disposés de manière solidaire en rotation pendant la déformation.

15. Procédé selon l'une quelconque des revendications 11 à 14,
**caractérisé en ce que**
la déformation est effectuée de telle sorte que les flancs de filetage (30) orientés à l'encontre de la direction de vissage (E, 8) de l'exclusivement une dent de filetage (7) déformée dans la direction de vissage (E, 8) ou **en ce que** les flancs de dents de filetage (9, 10) orientés à l'encontre de la direction de vissage (E, 8) des dents de filetage (7, 7) déformées dans la direction de vissage (E, 8) présente/présentent à chaque fois un gradin.
